Europäisches Patentamt

European Patent Office

Office européen des brevets

(19)

(11) **EP 1 006 749 A2**

(12) **EUROPÄISCHE PATENTANMELDUNG**

(43) Veröffentlichungstag:
   **07.06.2000 Patentblatt 2000/23**

(51) Int Cl.⁷: **H04Q 11/00**, H04L 29/06,
   **H04J 14/02**

(21) Anmeldenummer: **99440339.2**

(22) Anmeldetag: **02.12.1999**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **04.12.1998 DE 19856022**

(71) Anmelder: **ALCATEL**
   **75008 Paris (FR)**

(72) Erfinder:
   • **Turban, Karl-Albert**
    **71229 Leonberg (DE)**
   • **Weiss, Bernd**
    **70825 Korntal (DE)**

(74) Vertreter: **Rausch, Gabriele, Dr. et al**
   **Alcatel**
   **Intellectual Property Department, Stuttgart**
   **Postfach 30 09 29**
   **70449 Stuttgart (DE)**

(54) **Weltweites Kommunikations-und Informationssystem**

(57)   Die Erfindung betrifft weltweites Kommunikations- und Informationssystem (1) mit mehreren lokalen Netzwerk-Knoten (5), über die Anwender (6) mit dem System (1) verbunden sind. Um bei diesem System (1) die Zugriffszeit und die Übertragungzeiten nachweisbar und entscheidend verkürzen zu können und um bei dem System (1) bestimmte Mindest-Datenübertragungsraten gewährleisten zu können, schlägt die Erfindung vor, daß das System (1) einen erdumspannenden Daten-Ring (2) aufweist, der mit mehreren Ab-/Zugängen (z.B. Add/Drop Multiplexern (ADM)) (4) versehen ist, die mittels mehrerer serieller Verbindungsleitungen (3), die jeweils als mehrere parallele Lichtwellenleiter ausgebildet sind, miteinander verbunden sind und an die Netzwerk-Knoten (5) angeschlossen sind, wobei die Daten, die auf dem System (1) abgelegt sind, auf dem Daten-Ring (2) permanent um die Erde kreisen.

Fig.1

EP 1 006 749 A2

**Beschreibung**

Die vorliegende Erfindung betrifft ein weltweites Kommunikations- und Informationssystem mit mehreren lokalen Netzwerk-Knoten, über die Anwender mit dem System verbunden sind.

Die Erfindung betrifft auch ein Verfahren zur Verfügungstellung von Informationen in einem weltweiten Kommunikations- und Informationssystem, mit dem Anwender über mehrere lokale Netzwerk-Knoten verbunden sind.

Ein solches weltweites Kommunikations- und Informationssystem ist aus dem Stand der Technik als das sog. Internet bekannt. Das Internet weist eine Vielzahl von weltweit verteilten Netzwerk-Knoten auf, die untereinander vernetzt sind. Anwender des Internet sind über mindestens einen dieser Netzwerk-Knoten oder ein Intranet mit dem Internet verbunden. Die Netzwerk-Knoten sind als Computer, sog. Internet-Server, ausgebildet. Die Daten des Internet werden auf Speichereinheiten, bspw. auf Festplatten oder im Cash-Speicher, der einzelnen Netzwerk-Knoten in einzelnen Netzseiten gespeichert. Auf diese Weise können eine Vielzahl von unterschiedlichen Daten, bspw. Texte, Grafiken oder Musik, auf dem Internet abgelegt werden.

Wenn nun ein Anwender auf bestimmte Daten des Internet zugreifen möchte, so erhält er über die Adresse des entsprechenden Netzwerk-Knotens, auf dem die gewünschten Daten abgespeichert sind, bzw. über die Adresse der entsprechenden Netzseite auf dem Netzwerk-Knoten Zugriff auf diesen Netzwerk-Knoten bzw. auf die Netzseite und auf die darauf gespeicherten Daten. Zwischen dem lokalen Netzwerk-Knoten, mit via den der Anwender mit dem Internet verbunden ist, und dem Netzwerk-Knoten, auf dem die gewünschten Daten abgespeichert sind, wird zum Zwecke der Datenübertragung ein Übertragungspfad ausgewählt. Dieser Übertragungspfad verläuft üblicherweise über mehrere Netzwerk-Knoten (auch Router genannt).

Bei der Auswahl des Übertragungspfads kommt es in den einzelnen Netzwerk-Knoten, über die der Übertragungspfad verläuft, zu einer Adressumsetzung der Adresse des gewünschten Netzwerk-Knotens bzw. der Adresse der gewünschten Netzseite. Aufgrund dieser mehrfachen Adressumsetzung dauert der erste Zugriff auf einen gewünschten Netzwerk-Knoten bzw. auf eine gewünschte Netzwerk-Seite in der Regel sehr lange.

Der Verlauf des Übertragungspfads kann vom Anwender nicht geplant oder gesteuert werden, d.h. der Anwender kann den Übertragungspfad nicht optimieren. Es kann weder festgelegt werden, durch welche Netzwerk-Knoten der Übertragungspfad verlaufen soll, noch kann die kürzeste Verbindung zwischen dem Netzwerk-Knoten, mit dem Anwender mit dem Internet verbunden ist, und dem Netzwerk-Knoten, auf dem die gewünschten Daten abgespeichert sind, gewählt werden. Die gewählten Übertragungspfade sind u.a. von der Verfügbarkeit von IP-Knoten abhängig. Das Routing und somit die Übertragungsperformance (transmission delay) zwischen Anwender und Cotentprovider (Anbieter von Information) kann bei zwei aufeinanderfolgenden Versuchen verschieden sein. Dadurch kann es vorkommen, daß der Übertragungspfad unnötig lang gewählt wird und über unnötig viele Netzwerk-Knoten verläuft. Da die einzelnen Netzwerk-Knoten jedoch nur eine begrenzte Vermittlungskapazität aufweisen, weist der ausgewählte Übertragungspfad, insbesondere wenn er über eine Vielzahl von Netzwerk-Knoten verläuft, häufig eine für den einzelnen Anwender sehr geringe verfügbare Übertragungsrate auf. Außerdem teilen sich mehrere Anwender die Übertragungsressourcen des Internet dynamisch. Ein Netzwerk-Knoten muß deshalb u. U. mehrere Übertragungen vermitteln, was regelmäßig zu einer Überlastung einzelner Netzwerk-Knoten und damit zu einer extrem niedrigen Übertragungsrate führt.

Da es sich bei dem Internet um ein sog. shared medium handelt, müssen sich die Anwender des Internet die vorhanden Übertragungskapazitäten teilen. Dadurch wird die Übertragungsrate sehr niedrig, wenn viele Anwender eine Datenübertragung über das Internet fordern. Eine Priorisierung bestimmter Datenübertragungen, d. h. eine bevorzugte Behandlung bestimmter Datenübertragungen um eine vorgegebene Datenübertragungsrate sicherzustellen, ist im Internet heute nicht möglich.

Um die Probleme der niedrigen Übertragungsraten im Internet teilweise beseitigen zu können, wäre es bspw. möglich, die Anzahl der Netzwerk-Knoten im Internet zu erhöhen. Dadurch könnte die Wahrscheinlichkeit, daß mehrere Datenübertragungen über den gleichen Netzwerk-Knoten verlaufen, reduziert werden. Statistisch gesehen, könnte zwar die Übertragungsrate des Internet erhöht werden. Im Einzelfall kann jedoch keine höhere Übertragungsrate für eine bestimmte Datenübertragung gewährleistet werden.

Aus dem Stand der Technik sind darüber hinaus Übertragungssysteme bekannt, die mit Lichtwellenleitern arbeiten und sehr hohe Übertragungskapazitäten aufweisen. Die Lichtwellenleiter sind bspw. als Glasfasern ausgebildet. Es sind mehrere Übertragungsverfahren für Lichtwellenleiter bekannt, mit deren Hilfe bei konstanter Kapazität eines Lichtwellenleiters die Übertragungsrate des Lichtwellenleiters verbessert werden kann.

Bei der Datenübertragung nach dem Zeitmultiplexverfahren (time division multiplexing - TDM) werden mehrere Signale ineinander verschachtelt. Das verschachtelte Signal wird dann über den Lichtwellenleiter übertragen und beim Empfänger wieder entschachtelt und zu den einzelnen Signale zusammengesetzt.

Bei der Datenübertragung nach dem Wellenlängenmultiplexverfahren (wavelength division multiplexing - WDM) werden mehrere Signale auf mehreren optischen Wellenlängen pro Glasfaser übertragen. Jede optische Wellenlänge wird als ein optischer Kanal bezeichnet. Heute sind etwa 30 bis 40 optische Kanäle auf einer Glasfaser möglich, in naher Zukunft werden mindestens 80 Kanäle pro Glasfaser möglich werden.

Bei der Datenübertragung nach dem sog. space division multiplexing (SDM) werden mehrere Glasfasern in einer Verbindungsleitung geführt. Heute sind als Glasfaserkabel bezeichnete Verbindungsleitungen mit etwa 60 Glasfasern bekannt und in Gebrauch.

Aus den vorgenannten Nachteilen der bekannten Kommunikations- und Informationssysteme ergibt sich eine Aufgabe der vorliegenden Erfindung, ein System der eingangs genannten Art dahingehend auszugestalten und weiterzubilden, daß die Zugriffszeit und die Übertagungszeit nachweisbar und entscheidend verkürzt und determiniert werden können, und daß auf dem System bestimmte Mindest-Datenübertragungsraten gewährleistet werden können.

Zur Lösung dieser Aufgabe schlägt die Erfindung ausgehend von dem Kommunikations- und Informationssystem der eingangs genannte Art vor, daß das System einen erdumspannenden Daten-Ring aufweist, der mit mehreren Ab/Zugängen (z.B. Add/Drop Multiplexern (ADM)) versehen ist, die mittels mehrerer serieller Verbindungsleitungen miteinander verbunden sind und an die die Netzwerk-Knoten angeschlossen sind, wobei die Daten, die auf dem System abgelegt sind, auf dem Daten-Ring permanent um die Erde kreisen.

Die Verbindungsleitungen weisen vorzugsweise jeweils mehrere parallele Lichtwellenleiter auf.

Das erfindungsgemäße Kommunikations- und Informationssystem weist zunächst einmal einen erdumspannenden weltweit erreichbaren Daten-Ring auf. Der Daten-Ring weist eine Vielzahl von seriellen Verbindungsleitungen auf, die z.B. mittels Add/Drop Multiplexern (ADM) zu dem Daten-Ring zusammengefügt sind. Die Verbindungsleitungen weisen jeweils mehrere parallel verlaufende Lichtwellenleiter auf. An die ADMs sind Netzwerk-Knoten angeschlossen, über die Anwender des erfindungsgemäßen Systems mit dem Daten-Ring verbunden sind. Jeder Anwender steht über lediglich einen Netzwerk-Knoten mit dem Daten-Ring in Verbindung. Die Anwender sind über lokale Netzwerke, bspw. über ein öffentliches Telefonnetz und/oder über ein firmeninternes Netzwerk (Intranet), an die Netzwerk-Knoten angeschlossen.

Die Daten, die auf dem erfindungsgemäßen Kommunikations- und Informationssystem abgelegt sind, kreisen auf dem Daten-Ring permanent um die Erde. Um bspw. die Datenmenge aufnehmen zu können, die gegenwärtig auf dem Internet abgespeichert ist, kann die erforderliche Kapazität des erfindungsgemäßen Daten-Rings gemäß der nachfolgenden Abschätzung bestimmt werden.

Die Server des Internet bieten eine Speicherkapazität von ca. 60 GByte öffentlich zugänglich an. Diese Kapazität berücksichtigt nicht, daß manche Informationen mehrfach gespeichert sind. So sind z. B. in der ganzen Welt Shareware und Bugfixes zum Teil in hunderten von Kopien auf verschiedenen Servern öffentlich zugänglich gespeichert. Nimmt man an, daß die notwendige Kapazität zum einmaligen Speichern aller täglich besuchten Web-Pages 100 GByte nicht überschreitet, so ist dies sicherlich eine zuverlässige Abschätzung des täglich besuchten Datenvolumens.

Die Kapazität K des erfindungsgemäßen Daten-Rings wird bestimmt durch

- die Anzahl $n_f$ parallel genutzter Lichtwellenleiter der Verbindungsleitung,
- die Anzahl $n_0$ parallel genutzter optischer Wellenlängen auf einem Lichtwellenleiter,
- die Bitrate $v_{el}$ des Lichtwellenleiters pro Wellenlänge,
- die Länge I der Lichtwellenleiter und
- die Ausbreitungsgeschwindigkeit $v_{opt}$ des Lichts.

Damit ergibt sich für die Kapazität K des Daten-Rings:

$$D = \frac{n_o \times n_f \times v_{el} \times I}{v_{opt}}$$

$$D = \frac{80 \times 60 \times 2,4 \times 10^9 \ b/s \times 100 \times 10^6 \ m}{200 \times 10^6 \ \frac{m}{s}}$$

$$D = 5,760 \times 10^{12} \ bit = 5,76 \ Tbit$$

$$D = 720 \ GByte$$

Um diese Kapazität zu erreichen, wird davon ausgegangen, daß eine Verbindungsleitung 60 parallel genutzte Lichtwellenleiter aufweist. Des weiteren wird angenommen, daß 80 optische Wellenlängen auf einem Lichtwellenleiter genutzt werden können. Als Bitrate des Lichtwellenleiters pro Wellenlänge wird $2,4 \cdot 10^9$ bit/sec gewählt. Als Länge der Lichtwellenleiter wird der zweieinhalbfache Erdumfang, also 100.000 km, angenommen. Das bedeutet, daß der Daten-Ring die Erde nicht nur einmal, sondern schlaufenförmig (zweieinhalbfacher Umfang des Äquators) umgibt. Der Daten-Ring kann die Erde bspw. in großen Schlaufen um die 5 Kontinente und als Unterseekabel geführt werden oder einmal um die Pole und ein weiteres Mal um den Äquator herum umgeben. In diesem Fall könnte also auch von einer Daten-Schlaufe gesprochen werden. Der Einfachheit halber wird hier jedoch auch eine Daten-Schlaufe als Daten-Ring bezeichnet. Selbstverständlich kann sich der Daten-Ring auch in weniger oder mehr Schlaufen um die Erde erstrecken, wodurch die Kapazität des Datenrings verringert bzw. weiter erhöht werden würde.

Als Ausbreitungsgeschwindigkeit in dem Lichtwellenleiter wird $200 \cdot 10^6$ m/sec angegeben. Mit diesen Vorgaben ergibt sich eine Kapazität des erfindungsgemäßen Daten-Rings von 720 GByte, die jedenfalls ausreicht, die im Internet heute enthaltene Datenmenge aufzunehmen.

Die Übertragungskapazität des erfindungsgemäßen Kommunikations- und Informationssystems kann auf einfache Weise modular erweitert werden, indem weitere parallele Lichtwellenleiter in den Daten-Ring eingebracht werden.

Die maximale Zugriffszeit auf die Daten, die in dem Daten-Ring kreisen, und die maximale Übertragungszeit der Daten des Daten-Rings zu einem Anwender ist höchstens so groß, wie die Zeit, die die Daten benötigen, um auf dem Daten-Ring einmal zu kreisen.

Der Übertragungspfad von dem Anwender zu den auf dem System abgelegten Daten verläuft bei dem erfindungsgemäßen System über lediglich einen Netzwerk-Knoten. Im Vergleich zu den aus den Stand der Technik bekannten Kommunikations- und Informationssystemen reduziert sich dadurch die Anzahl der Netzwerk-Knoten, über die der Übertragungspfad verläuft, erheblich. Da die Übertragungskapazitäten der einzelnen Netzwerk-Knoten bekannt sind, läßt sich die Zugriffszeit und die Übertragungszeit über diesen einen Netzwerk-Knoten recht genau bestimmen.

Durch die ADMs können die auf dem erfindungsgemäßen System abgelegten Daten in Zeitschlitzen dicht hintereinander angeordnet werden. Dadurch werden die Übertragungskapazitäten des Systems vollständig ausgenutzt. Eine Verschwendung von Übertragungskapazitäten durch Leerkapazitäten wie bei der asynchronen Übertragung wird verhindert.

Schließlich können in dem erfindungsgemäßen Kommunikations- und Informationssystem bestimmte Übertragungskapazitäten für bestimmte Anwendungen reserviert werden. So ist es bspw. denkbar, daß bestimmte Anteile der Übertragungskapazität nur zahlenden Content Providern zur Verfügung gestellt wird. Andere Übertragungskapazitäten können für synchrone Dienste, bspw. für Internet-Protokol (IP)-Telefonie, IP-Videokonferenzen o. ä. reserviert werden. Das erfindungsgemäße System erlaubt auch ein Cashing von häufig aufgerufenen Daten. Dadurch können die Zugriffs- und Übertragungszeiten von Daten auf häufig angeforderten Netzseiten zusätzlich reduziert werden. Eine zentrale Verwaltung der Daten auf dem Ring verhindert mehrfaches Ablegen der Daten und optimiert die Auslastung.

Gemäß einer vorteilhaften Weiterbildung der Erfindung sind die Lichtwellenleiter als Glasfasern ausgebildet.

Gemäß einer bevorzugten Ausführungsform weist das erfindungsgemäße System Mittel zur Übertragung der Daten auf parallelen Wellenlängen auf. Dabei werden die Daten nach dem WDM-Verfahren auf dem Daten-Ring übertragen.

Alternativ oder zusätzlich wird vorgeschlagen, daß das erfindungsgemäße System Mittel zur Übertragung der Daten auf parallelen Lichtwellenleitern aufweist. Dabei werden die Daten nach dem SDM-Verfahren auf dem Daten-Ring übertragen.

Gemäß einer weiteren vorteilhaften Weiterbildung der vorliegenden Erfindung weist das System Mittel zur synchronen Übertragung der Daten auf. Dabei werden die Daten in synchronen Übertragungsrahmen auf parallelen Wellenlängen oder auf parallelen Lichtwellenleitern übertragen.

Gemäß einer vorteilhaften Weiterbildung der Erfindung wird vorgeschlagen, daß das System Mittel zur Übertragung der Daten mittels eines SDH-Datenübertragungsverfahrens aufweist. Dabei werden die Daten zur Übertragung über den Daten-Ring in eine synchrone Rahmenstruktur gebracht. Die Übertragungsrahmen einer Wellenlänge (STM 1, STM 4, STM 16 oder STM 64) können gemäß dem SDH-Standard in kleinere Container unterteilt werden. Der Zugriff auf diese Container wird im Netzwerk geregelt. In einem Container wird ein Index, der mit einem Verzeichnis vergleichbar ist, übertragen. Dieser Index wird von dem lokalen Netzwerk-Knoten benutzt, um zu entscheiden, auf welchem Lichtwellenleiter, auf welcher Wellenlänge und in welchem Container die gesuchten Daten zum Herunterladen zu finden sind, bzw. auf welchem Lichtwellenleiter, auf welcher Wellenlänge und in welchen Container der Netzwerk-Knoten schreiben darf.

Gemäß einer bevorzugten Ausführungsform wird vorgeschlagen, daß ausgewählte Netzwerk-Knoten eine Schreibberechtigung aufweisen. Alternativ oder zusätzlich wird vorgeschlagen, daß alle Netzwerk-Knoten eine Leseberechtigung aufweisen.

Die Kapazität des erfindungsgemäßen Kommunikations- und Informationssystems kann in verschiedene Bereiche unterteilt werden. In diesem Fall müssen die Zugriffsrechte auf die Zeitrahmen und auf die Lichtwellenleiter der Verbindungsleitung zwischen den Netzwerk-Knoten jedoch eindeutig geregelt sein. Die Regelung der Zugriffsrechte kann bspw. über feste, statische Regeln erfolgen, die immer für alle Netzwerk-Knoten gelten, oder aber über veränderliche, dynamische Regeln erfolgen, die als Signale über das erfindungsgemäße System zu den betroffenen Netzwerk-Knoten übertragen werden und die an bestimmte Parameter in dem System angepasst sind.

Gemäß einer vorteilhaften Weiterbildung der Erfindung wird vorgeschlagen, daß ausgewählte Ressourcen des Systems für quasi stationäre Informationen reserviert sind. Vorteilhafterweise sind andere ausgewählte Ressourcen des Systems für temporäre Informationen reserviert.

Eine weitere Aufgabe der vorliegenden Erfindung besteht darin, ein Verfahren der eingangs genannten Art dahingehend auszugestalten und weiterzubilden, daß die Zugriffszeit und die Übertagungszeit nachweisbar und entscheidend verkürzt werden können, und daß bei dem Verfahren bestimmte Mindest-Datenübertragungsraten gewährleistet werden können.

Zur Lösung dieser Aufgabe schlägt die Erfindung vor, daß die Daten, die auf dem System abgelegt sind, auf einem erdumspannenden Daten-Ring permanent um die Erde übertragen werden, wobei der Daten-Ring mehrere Ab-/Zugänge z.B. mittels Add/Drop Multiplexern (ADM) verbundene serielle Verbindungsleitungen aufweist.

Gemäß einer vorteilhaften Weiterbildung der Erfindung wird vorgeschlagen, daß die Daten auf den Verbindungsleitungen auf parallelen Wellenlängen übertragen werden. Alternativ oder zusätzlich wird vorgeschlagen, daß die Daten auf den Verbindungsleitungen auf parallelen Lichtwellenleitern übertragen werden. Vorzugsweise werden die Daten auf den parallelen Wellenlängen und/oder den parallelen Lichtwellenleitern in synchronen Übertragungsrahmen übertragen. Die Lichtwellenleiter sind bspw. als Glasfasern ausgebildet.

Gemäß einer bevorzugten Ausführungsform der Erfindung wird vorgeschlagen, daß die Daten mittels eines SDH-Datenübertragungsverfahrens übertragen werden. Wenn die Verbindungsleitungen mehrere parallele Lichtwellenleiter aufweisen, kann vorteilhafterweise auf einem der Lichtwellenleiter ein Verzeichnis der Daten übertragen werden, die auf dem Daten-Ring übertragen werden.

Eine bevorzugte Ausführungsform der vorliegenden Erfindung wird im Folgenden anhand der Zeichnungen näher erläutert. Es zeigen:

Fig. 1    ein erfindungsgemäßes Kommunikations- und Informtationssystem gemäß einer bevorzugten Ausführungsform; und

Fig. 2    eine von dem erfindungsgemäßen System verwendete Datenstruktur.

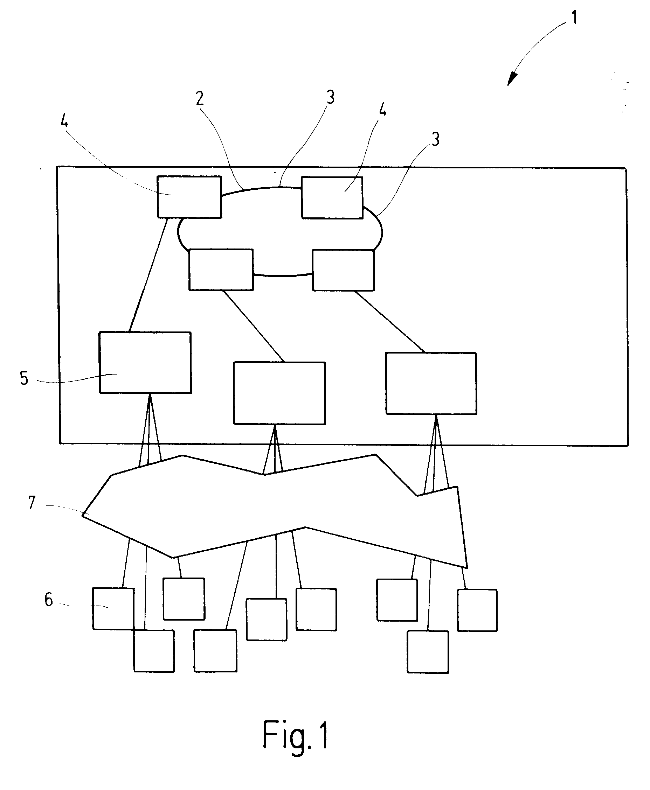

Das in Figur 1 dargestellte erfindungsgemäße Kommunikations- und Informationssystem ist in seiner Gesamtheit mit dem Bezugszeichen 1 gekennzeichnet. Das erfindungsgemäße System 1 weist einen erdumspannenden, weltweit erreichbaren Daten-Ring 2 auf. Der Daten-Ring 2 weist eine Vielzahl von seriellen Verbindungsleitungen 3 auf, die wie hier gezeigt mittels Add/Drop Multiplexern (ADM) 4 den Zugriff auf den Daten-Ring 2 sicherstellen. Das Kommunkations- und Informationssystem 1 aus Figur 1 zeigt einen Daten-Ring 2, der vier Verbindungsleitungen 3 und vier Add/Drop Multiplexer 4 aufweist.

Die Verbindungsleitungen 3 weisen jeweils mehrere parallel verlaufende Lichtwellenleiter auf. An die Add/Drop Multiplexer 4 sind Netzwerk-Knoten 5 angeschlossen, über die Anwender 6 des erfindungsgemäßen Systems 1 mit dem Daten-Ring 2 verbunden sind. Genauer gesagt sind die Anwender 6 über lokale Netzwerke 7, bspw. über ein öffentliches Telefonnetz und/oder über ein firmeninternes Netzwerk (Intranet), an die Netzwerkknoten 5 angeschlossen. Somit steht jeder Anwender 6 im günstigsten Fall über lediglich einen Netzwerk-Knoten 5 mit dem Daten-Ring 2 in Verbindung.

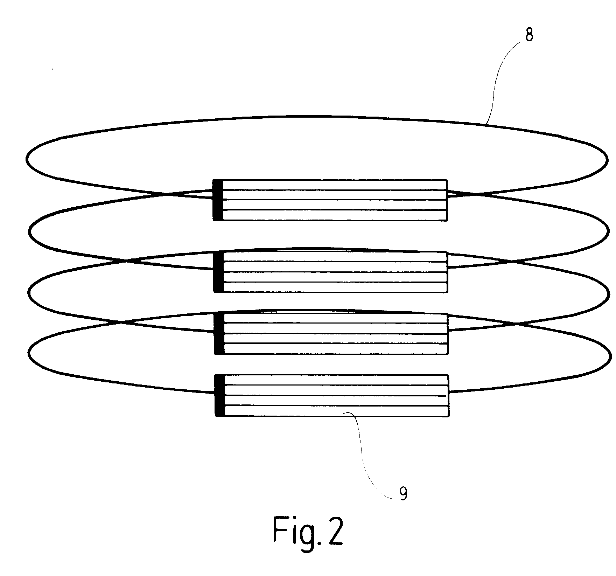

Die Daten, die auf dem erfindungsgemäßen Kommunikations- und Informationssystem 1 abgelegt sind, kreisen auf dem Daten-Ring 2 permanent um die Erde. Die Struktur der Daten ist in Figur 2 symbolisch dargestellt. Jeder der in Figur 2 dargestellten Ringe 8 stellt eine Wellenlänge dar, über die Daten auf dem Daten-Ring 2 übertragen werden. Je Lichtwellenleiter einer Verbindungsleitung 3 können die Daten auf mehreren unterschiedlichen Wellenlängen übertragen werden. Mehrere Lichtwellenleiter der Verbindungsleitungen 3 können parallel geführt werden. Dadurch kann der Daten-Ring 2 ein sehr großes Datenvolumen aufnehmen.

Zur Übertragung der Daten auf dem Daten-Ring 2 werden synchrone Übertragungsrahmen erzeugt. Die Übertragungsrahmen einer Wellenlänge können gemäß einem SDH-Standard in kleinere Container 9 unterteilt werden. Der Zugriff auf diese Container 9 wird in dem System 1 geregelt. In einem der Container 9 wird ein Index, der mit einem Verzeichnis vergleichbar ist, übertragen. Dieser Index wird von den lokalen Netzwerk-Knoten 5 benutzt, um zu entscheiden, auf welchen Lichtwellenleiter, auf welcher Wellenlänge und in welchem Container 9 die gesuchten Daten zum Herunterladen zu finden sind, bzw. auf welchem Lichtwellenleiter, auf welcher Wellenlänge oder in welchem Container 9 der Netzwerk-Knoten 5 schreiben darf.

Die Zugriffszeit auf alle im Ring gespeichertenm Daten nach oben kann determiniert werden. Der vom Benutzer festgestellte varaible Anteil an der Zugriffszeit hängt nur noch vom lokalen Zugangsknoten und dem daran angeschalteten Netzwerk ab.

**Patentansprüche**

1.    Weltweites Kommunikations- und Informationssystem (1) mit mehreren lokalen Netzwerk-Knoten (5), über die Anwender (6) mit dem System (1) verbunden sind, **dadurch gekennzeichnet,** daß das System (1) einen erdumspannenden Daten-Ring (2) aufweist, der mit mehreren Ab/Zugriffgeräten (4) versehen ist, die mittels mehrerer serieller Verbindungsleitungen (3), miteinander verbunden sind und an die die Netzwerk-Knoten (5) angeschlossen sind, wobei die Daten, die auf dem System (1) abgelegt sind, auf dem Daten-Ring (2) permanent um die Erde kreisen.

2.    Kommunikations- und Informationssystem (1) nach Anspruch 1, dadurch gekennzeichnet, daß die Verbindungsleitungen (3) jeweils mehrere parallele Lichtwellenleiter aufweisen.

**3.** Kommunikations- und Informationssystem (1) nach Anspruch 2, dadurch gekennzeichnet, daß die Lichtwellenleiter als Glasfasern ausgebildet sind.

**4.** Kommunikations- und Informationssystem (1) nach einem der Ansprüche 1 bis 3, dadurch gekennzeichnet, daß das System (1) Mittel zur Übertragung der Daten auf parallelen Wellenlängen aufweist.

**5.** Kommunikations- und Informationssystem (1) nach einem der Ansprüche 2 bis 4, dadurch gekennzeichnet, daß das System (1) Mittel zur Übertragung der Daten auf den parallelen Lichtwellenleitern aufweist.

**6.** Kommunikations- und Informationssystem (1) nach Anspruch 4 oder 5, dadurch gekennzeichnet, daß das System (1) Mittel zur synchronen Übertragung der Daten aufweist.

**7.** Kommunikations- und Informationssystem (1) nach Anspruch 6, dadurch gekennzeichnet, daß das System (1) Mittel zur Übertragung der Daten mittels eines SDH-Datenübertagungsverfahrens aufweist.

**8.** Kommunikations- und Informationssystem (1) nach einem der Ansprüche 1 bis 7, dadurch gekennzeichnet, daß ausgewählte Netzwerk-Knoten (5) mindestens eine zeitlich begrenzte Schreibberechtigung aufweisen.

**9.** Kommunikations- und Informationssystem (1) nach einem der Ansprüche 1 bis 8, dadurch gekennzeichnet, daß alle Netzwerk-Knoten (5) eine Leseberechtigung aufweisen.

**10.** Kommunikations- und Informationssystem (1) nach einem der Ansprüche 1 bis 9, dadurch gekennzeichnet, daß ausgewählte Ressourcen des Systems (1) für quasi stationäre Informationen reserviert sind.

**11.** Kommunikations- und Informationssystem (1) nach einem der Ansprüche 1 bis 10, dadurch gekennzeichnet, daß ausgewählte Ressourcen des Systems (1) für temporäre Informationen reserviert sind.

**12.** Kommunikations- und Informationssystem (1) nach einem der Ansprüche 1 bis 11, dadurch gekennzeichnet, daß temporär zugeordnete Kapazitäten auf dem Ring (Zeitschlitz, Faser, Farbe/Wellenlänge) für beide Kommunikationsrichtungen nur einmal zugewiesen sind.

**13.** Kommunikations- und Informationssystem (1) nach einem der Ansprüche 1 bis 12, dadurch gekennzeichnet, daß das System die Zugriffszeit auf die im Ring gespeicherten Daten nach oben begrenzt.

**14.** Verfahren zur Verfügungstellung von Informationen in einem weltweiten Kommunikations- und Informationssystem (1), mit dem Anwender über mehrere lokale Netzwerk-Knoten (5) verbunden sind, **dadurch gekennzeichnet,** daß die Daten, die auf dem System (1) abgelegt sind, auf einem erdumspannenden Daten-Ring (2) permanent um die Erde übertragen werden, wobei der Daten-Ring (2) mehrere mittels Ab-/Zugriffgeräten (4) verbundene serielle Verbindungsleitungen (3) aufweist.

**15.** Verfahren nach Anspruch 14, dadurch gekennzeichnet, daß die Daten auf den Verbindungsleitungen (3) auf parallelen Wellenlängen übertragen werden.

**16.** Verfahren nach Anspruch 14 oder 15, dadurch gekennzeichnet, daß die Daten auf den Verbindungsleitungen (3) auf parallelen Lichtwellenleitern übertragen werden.

**17.** Verfahren nach Anspruch 14 oder 16, dadurch gekennzeichnet, daß die Daten in synchronen Übertragungsrahmen übertragen werden.

**18.** Verfahren nach einem der Ansprüche 14 bis 17, dadurch gekennzeichnet, daß die Daten mittels eines SDH-Datenübertragungsverfahrens übertragen werden.

**19.** Verfahren nach einem der Ansprüche 14 bis 18, dadurch gekennzeichnet, daß auf einem der Lichtwellenleiter ein Verzeichnis der Daten übertragen wird, die auf dem Daten-Ring (2) übertragen werden.

Fig. 1

Fig. 2